# EUROPEAN PATENT APPLICATION

(11) **EP 3 620 092 A1**
(43) Date of publication of application: **11.03.2020**
(21) Application number: 19196100.2
(22) Date of filing: 09.09.2019
(51) Int. Cl.: A47L 9/04, A47L 9/06

(54) **CLEANER FOR CLEANING ROBOT**

(30) Priority: 10.09.2018 JP 2018168841
(71) Applicant: Kabushiki Kaisha Toyota Jidoshokki, Kariya-shi, Aichi 448-8671 (JP)
(72) Inventor: NAKASHIMA, Takashi, Kariya-shi,, Aichi 448-8671 (JP); NOMURA, Toshihiko, Chuo-ku,, Tokyo 104-0061 (JP)
(74) Representative: TBK

(57) **Abstract**

A cleaner for a cleaning robot cleaning a floor surface while traveling includes a support member, two parallel link mechanisms fixed to both right and left sides of the support member so as to be swingable in an upward-downward direction of the cleaning robot, a first connecting pin interconnecting joint portions of the two parallel link mechanisms, a second connecting pin disposed above the first connecting pin and interconnecting other joint portions of the two parallel link mechanisms, a brush unit attached to the first connecting pin and having a brush grounded to the floor surface, and a lifting and lowering unit lifting and lowering the brush unit by swinging the parallel link mechanism in the upward-downward direction.

## Description

### TECHNICAL FIELD

The present disclosure relates to a cleaner for a cleaning robot.

### BACKGROUND

A technique described in, for example, Japanese Unexamined Patent Publication No. 2017-12907 is known as a cleaner for a cleaning robot according to the related art. The cleaning robot described in Japanese Unexamined Patent Publication No. 2017-12907 is provided with a main body housing provided with a suction port on the lower surface of the front portion of the main body housing, a pair of drive wheels provided on the main body housing, a front wheel provided in the front end portion of the main body housing, a rear wheel provided in the rear end portion of the main body housing, a rotating brush disposed in the suction port, and a pair of side brushes disposed to the side of the suction port. When the cleaning robot moves forward, dust on a floor surface is swept up by the rotating brush and dust to the side of the suction port is guided to the suction port by the side brush.

### SUMMARY

The related art has the following problems. Since the rotating brush is fixed to the main body housing, the rotating brush may not be grounded to the floor surface when the floor surface is stepped or undulates. In this case, the floor surface cannot be stably cleaned. In addition, since the rotating brush is fixed to the main body housing, the cleaning robot travels while dragging the rotating brush even when the cleaning robot moves without performing cleaning. In this case, the rotating brush wears. Accordingly, when the cleaning robot moves without performing cleaning, a constraint such as slower-than-necessary traveling is required.

An object of the present disclosure is to provide a cleaner for a cleaning robot allowing a brush to be grounded even to a floor surface having a step or the like and allowing the cleaning robot to travel without dragging the brush.

An aspect of the present disclosure relates to a cleaner for a cleaning robot cleaning a floor surface while traveling. The cleaner includes a support member, two parallel link mechanisms fixed to both right and left sides of the support member so as to be swingable in an upward-downward direction of the cleaning robot, a first connecting pin interconnecting joint portions of the two parallel link mechanisms, a second connecting pin disposed above the first connecting pin and interconnecting other joint portions of the two parallel link mechanisms, a brush unit attached to the first connecting pin and having a brush grounded to the floor surface, and a lifting and lowering unit lifting and lowering the brush unit by swinging the parallel link mechanism in the upward-downward direction.

In the cleaner for a cleaning robot described above, the two parallel link mechanisms are fixed to both of the right and left sides of the support member so as to be swingable in the upward-downward direction of the cleaning robot and the brush unit having the brush grounded to the floor surface is attached to the first connecting pin interconnecting the joint portions of the two parallel link mechanisms. Accordingly, even when the floor surface has a step or the like during the traveling of the cleaning robot, the brush moves in the upward-downward direction of the cleaning robot by following the step or the like of the floor surface. As a result, the brush can be grounded even to the floor surface having the step or the like. In addition, when the cleaning robot moves without performing cleaning, the parallel link mechanism is raised by the lifting and lowering unit and the brush unit is kept raised from the floor surface, and thus the cleaning robot is capable of traveling without dragging the brush.

The brush unit may have a block pivotably supported by the first connecting pin and a brush holder pivotably supported by the block via a support pin extending in a forward-rearward direction of the cleaning robot and holding the rotating brush. In this configuration, the brush is swingable in the forward-rearward direction of the cleaning robot about the first connecting pin and the brush is swingable in the rightward-leftward direction of the cleaning robot about the support pin. Accordingly, even when the floor surface has the step or the like, the brush swings in the forward-rearward direction and the rightward-leftward direction of the cleaning robot by following the step or the like of the floor surface. As a result, the brush can be reliably and smoothly grounded to the floor surface having the step or the like.

The lifting and lowering unit may swing the parallel link mechanism in the upward-downward direction by lifting and lowering the second connecting pin. In this configuration, it is possible to swing the parallel link mechanism in the upward-downward direction in a space-efficient manner.

The lifting and lowering unit may have a motor and a cam fixed to an output shaft of the motor and pushing up the second connecting pin. The cam may be spaced downward from the second connecting pin in a state where the rotating brush is grounded to the floor surface. In this configuration, it is possible to lift and lower the second connecting pin with a simple structure. In addition, in a state where the brush is grounded to the floor surface, the cam is spaced downward from the second connecting pin, and thus the brush is lowered by the second connecting pin being lowered when a wheel of the cleaning robot is on the step or the like. As a result, the brush can be grounded to the floor surface even when the wheel of the cleaning robot is on the step or the like.

According to the present disclosure, the brush can be grounded even to a floor surfaces having a step or the like and the cleaning robot is capable of traveling without dragging the brush.

### BRIEF DESCRIPTION OF THE DRAWINGS

FIG. 1 is a side view illustrating a cleaning robot provided with a cleaner according to an embodiment of the present disclosure.
FIG. 2 is a perspective view illustrating the appearance of the cleaner.
FIG. 3 is a side view of the cleaner.
FIG. 4 is a front view of the cleaner.
FIG. 5 is a bottom view of a brush unit.
FIG. 6 is a side view illustrating how the cleaner swings in a forward-rearward direction.
FIG. 7 is a front view illustrating how the cleaner swings in a rightward-leftward direction.
FIG. 8 is a configuration diagram of a control system of the cleaning robot.
FIG. 9 is a side view illustrating a state where a rotating brush is raised from a floor surface by a lifting and lowering unit.
FIG. 10 is a front view illustrating a state where the rotating brush is raised from the floor surface by the lifting and lowering unit.
FIG. 11 is a side view illustrating a state where the rotating brush is grounded to the floor surface by a parallel link mechanism being lowered in a case where a wheel of a traveling carriage is on a step portion of the floor surface.

### DETAILED DESCRIPTION

Hereinafter, an embodiment of the present disclosure will be described in detail with reference to accompanying drawings.

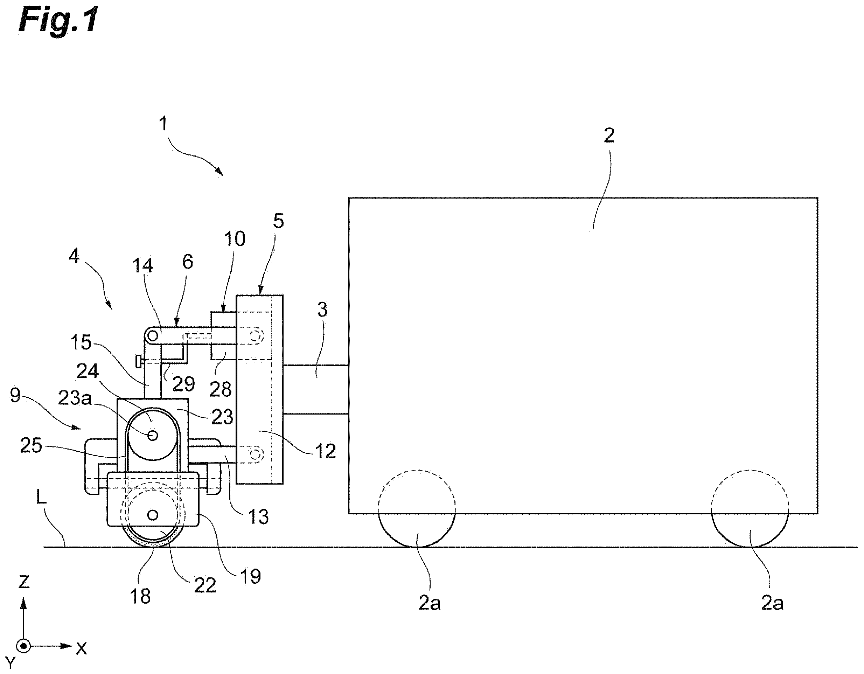

FIG. 1 is a side view illustrating a cleaning robot provided with a cleaner according to an embodiment of the present disclosure. In FIG. 1, a cleaning robot 1 is a self-propelled robot cleaning a floor surface L while traveling. The cleaning robot 1 is provided with a traveling carriage 2 and a cleaner 4 attached to the front end of the traveling carriage 2 via a connecting member 3. The traveling carriage 2 has four omnidirectional wheels 2a and is capable of moving in all directions, that is, in the forward, rearward, rightward, and leftward directions.

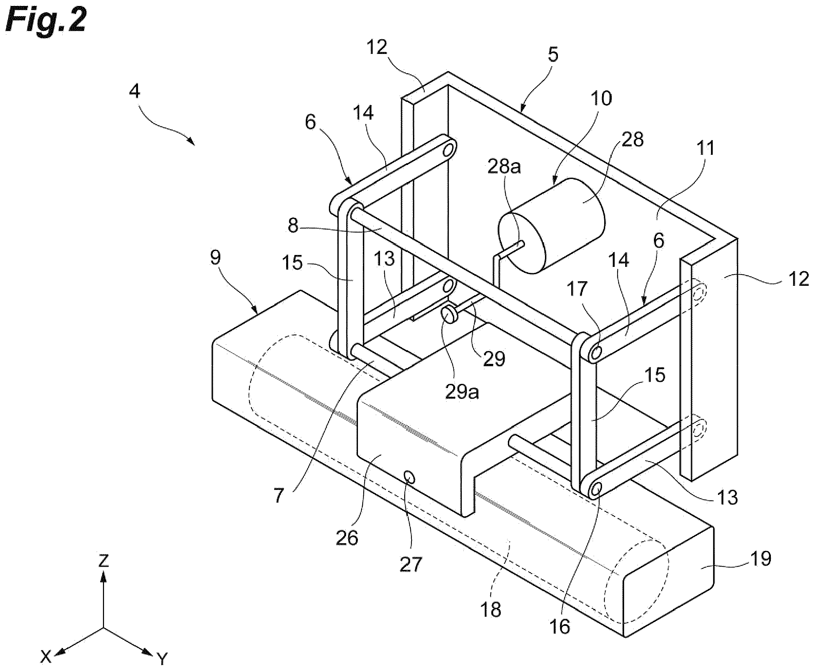

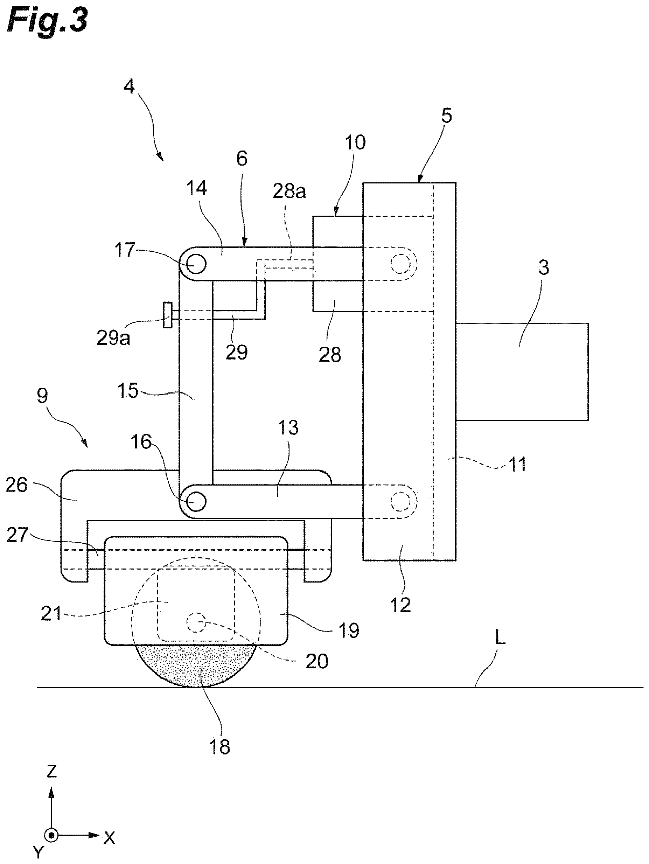

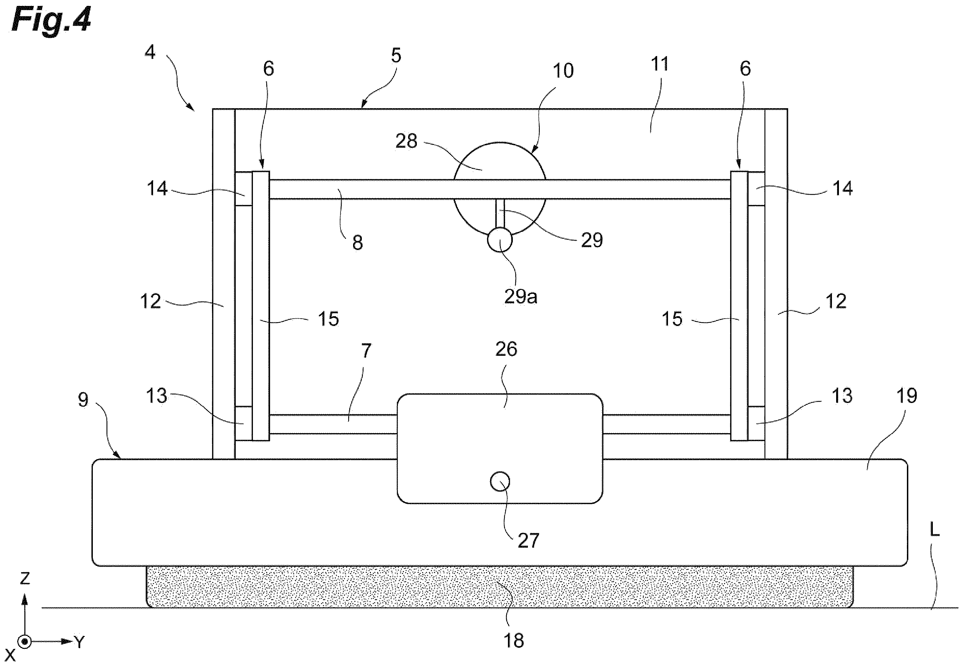

FIG. 2 is a perspective view illustrating the appearance of the cleaner 4. FIG. 3 is a side view of the cleaner 4. FIG. 4 is a front view of the cleaner 4. Incidentally, in FIGS. 2 to 4, the configuration of a part of a brush unit 9 (described later) in FIG. 1 is omitted for convenience.

In FIGS. 1 to 4, the cleaner 4 of the present embodiment is disposed in the front portion of the cleaning robot 1 and cleans the floor surface L. The cleaner 4 is provided with a support member 5, two parallel link mechanisms 6 on the right and left, a lower connecting pin 7 (first connecting pin), an upper connecting pin 8 (second connecting pin), the brush unit 9, and a lifting and lowering unit 10.

The support member 5 has a base plate 11 fixed to the connecting member 3 of the traveling carriage 2 and two protruding portions 12 protruding forward from both of the right and left end portions of the base plate 11. The protruding portion 12 extends in the upward-downward direction (Z direction) of the cleaning robot 1.

The parallel link mechanism 6 is fixed to both of the right and left sides of the support member 5 so as to be swingable in the upward-downward direction. The parallel link mechanism 6 has a lower link 13 pivotably supported in the lower portion of the inside surface of the protruding portion 12, an upper link 14 pivotably supported in the upper portion of the inside surface of the protruding portion 12, and a connection link 15 interconnecting the lower link 13 and the upper link 14. The lower link 13 and the upper link 14 extend in the forward-rearward direction (X direction) of the cleaning robot 1. The connection link 15 extends in the upward-downward direction.

The lower link 13 and the connection link 15 are pivotably connected to each other. The connection portion between the lower link 13 and the connection link 15 constitutes a lower joint portion 16. The upper link 14 and the connection link 15 are pivotably connected to each other. The connection portion between the upper link 14 and the connection link 15 constitutes an upper joint portion 17.

The lower connecting pin 7 interconnects the lower joint portions 16 of the two parallel link mechanisms 6. The upper connecting pin 8 is disposed above the lower connecting pin 7 and interconnects the upper joint portions 17 of the two parallel link mechanisms 6. The lower connecting pin 7 and the upper connecting pin 8 extend in the rightward-leftward direction (Y direction) of the cleaning robot 1.

The brush unit 9 is attached to the lower connecting pin 7. The brush unit 9 has a cylindrical rotating brush 18 grounded to the floor surface L and sweeping up trash on the floor surface L and a box-shaped brush holder 19 rotatably holding the rotating brush 18. The rotating brush 18 and the brush holder 19 extend in the rightward-leftward direction of the cleaning robot 1.

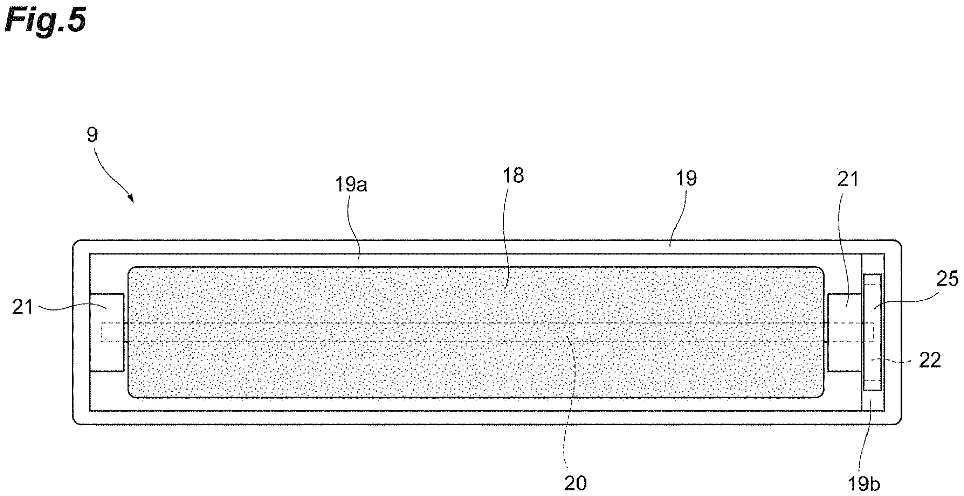

As illustrated in FIG. 5, the brush holder 19 is provided with a brush accommodating portion 19a in which the rotating brush 18 is accommodated. In addition, an opening portion 19b is provided on one of the right and left end sides of the brush holder 19 so that a belt 25 (described later) is disposed. Incidentally, FIG. 5 is a bottom view of the brush unit 9. Support brackets 21 rotatably supporting a rotary shaft 20 are respectively attached to both of the right and left end sides of the brush holder 19. The rotating brush 18 is fixed to the rotary shaft 20 and rotates integrally with the rotary shaft 20. A pulley 22 is fixed to the end portion of the rotary shaft 20 that is on the opening portion 19b side.

As illustrated in FIG. 1, a brush motor 23 is attached to one of the right and left sides of the upper surface of the brush holder 19. A pulley 24 is fixed to an output shaft 23a of the brush motor 23. The belt 25 is stretched around the pulleys 22 and 24. When the brush motor 23 is driven to rotate, the rotation of the brush motor 23 is transmitted to the rotating brush 18 via the pulley 24, the belt 25, the pulley 22, and the rotary shaft 20 and the rotating brush 18 rotates.

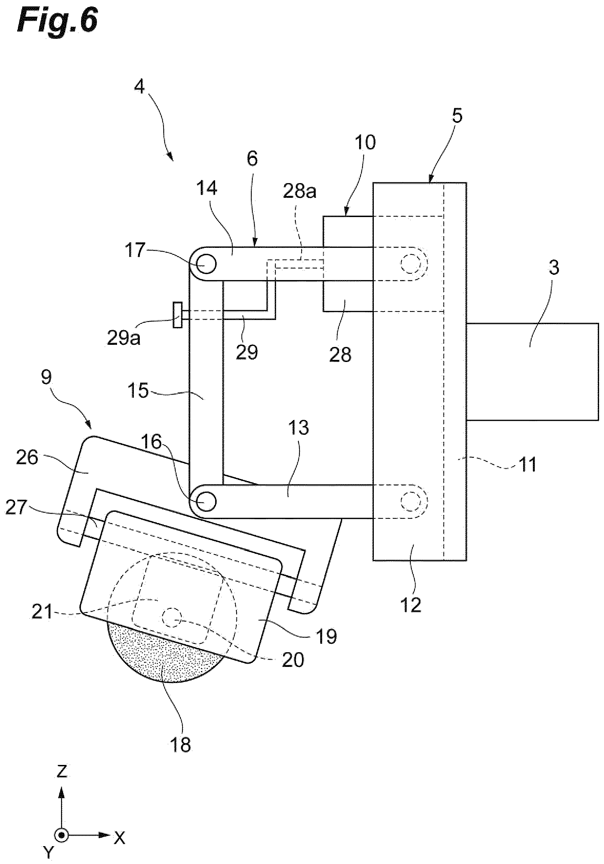

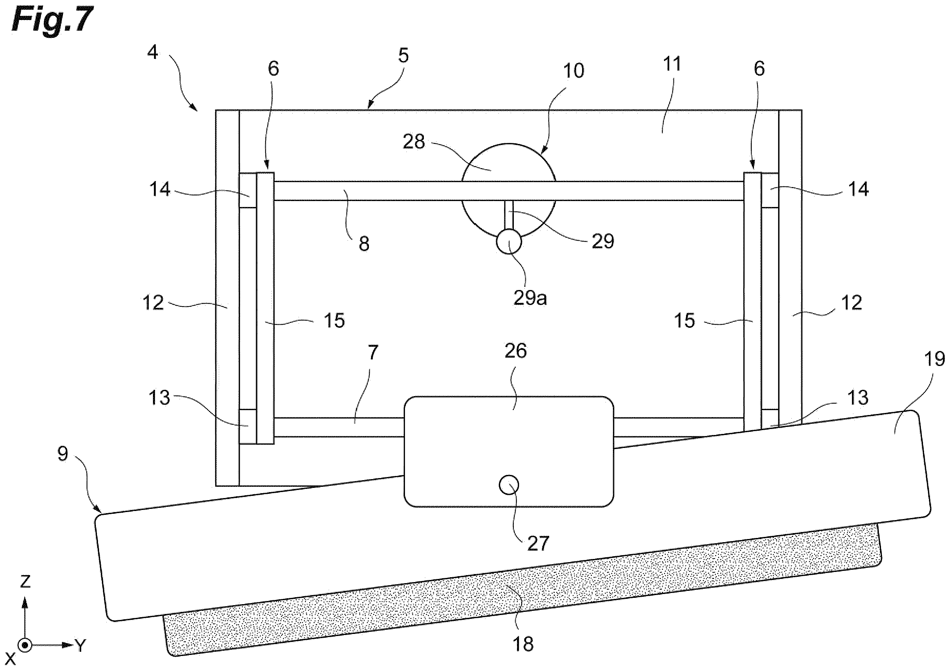

In addition, the brush unit 9 has a block 26 U-shaped in side view and pivotably supported by the lower connecting pin 7. The brush holder 19 is pivotably supported by the block 26. Specifically, a support pin 27 extending in the forward-rearward direction is fixed to the block 26. The brush holder 19 is pivotably supported by the support pin 27. As a result, the brush holder 19 is swingable in the forward-rearward direction about the lower connecting pin 7 (not illustrated in FIG. 6) as illustrated in FIG. 6. In addition, as illustrated in FIG. 7, the brush holder 19 is swingable in the rightward-leftward direction about the support pin 27.

The lifting and lowering unit 10 lifts and lowers the brush unit 9 by swinging the parallel link mechanism 6 in the upward-downward direction. Specifically, the lifting and lowering unit 10 swings the parallel link mechanism 6 in the upward-downward direction and lifts and lowers the brush unit 9 by lifting and lowering the upper connecting pin 8. The lifting and lowering unit 10 has a lifting and lowering motor 28 attached to the base plate 11 of the support member 5 and an L-shaped cam 29 fixed to an output shaft 28a of the lifting and lowering motor 28 and pushing up the upper connecting pin 8.

The cam 29 is spaced downward from the upper connecting pin 8 in a state where the rotating brush 18 is grounded to the floor surface L. A stopper 29a is provided at the tip of the cam 29 so that the upper connecting pin 8 does not escape from the cam 29 when the cam 29 pushes up the upper connecting pin 8.

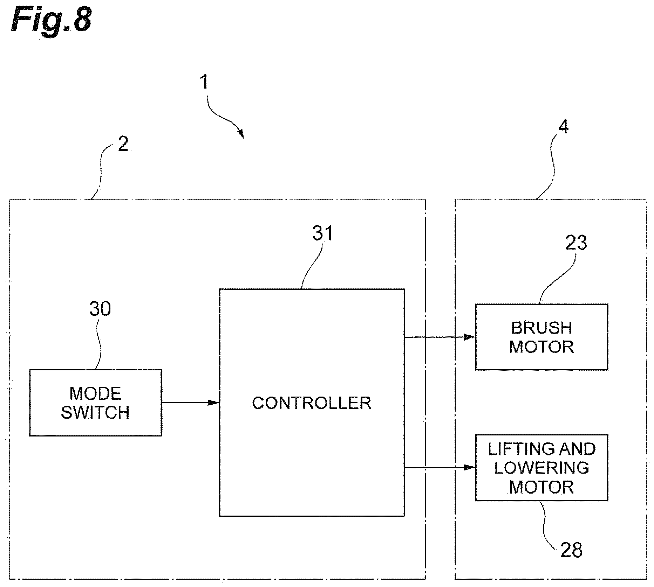

As illustrated in FIG. 8, the traveling carriage 2 is equipped with a mode switch 30 and a controller 31. The mode switch 30 is a switch allowing switching between a cleaning mode and a movement mode. The cleaning mode is a mode in which the cleaning robot 1 cleans the floor surface L while traveling. The movement mode is a mode in which the cleaning robot 1 moves without cleaning the floor surface L.

The controller 31 controls the brush motor 23 and the lifting and lowering motor 28 in accordance with the mode selected by the mode switch 30.

When the cleaning mode is selected by the mode switch 30, the controller 31 controls the lifting and lowering motor 28 such that the rotating brush 18 remains grounded to the floor surface L (see FIGS. 1, 3, and 4) and controls the brush motor 23 such that the rotating brush 18 rotates. As a result, the floor surface L can be cleaned by the cleaner 4.

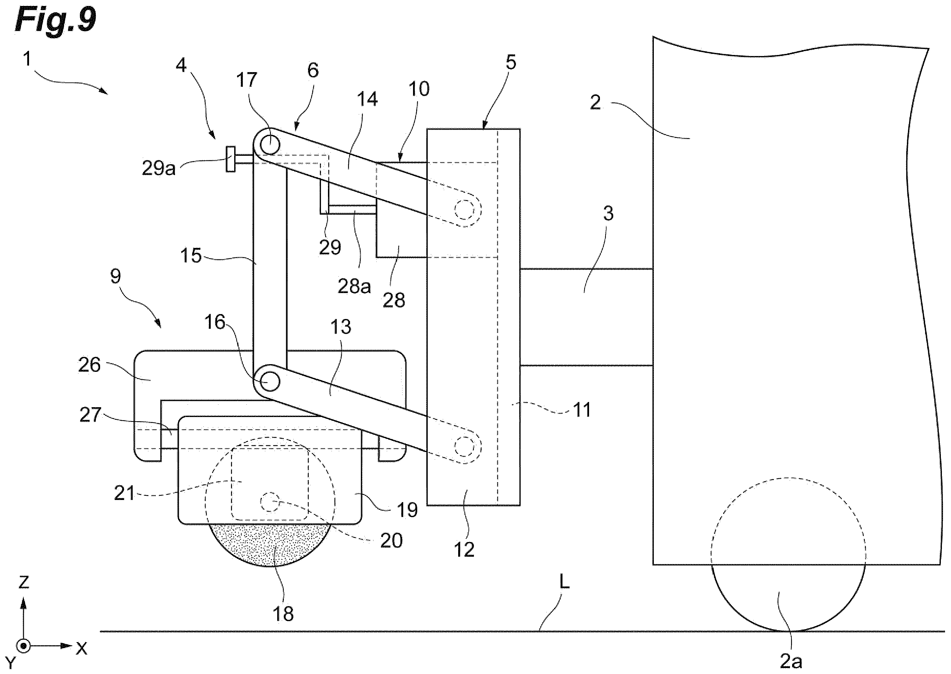

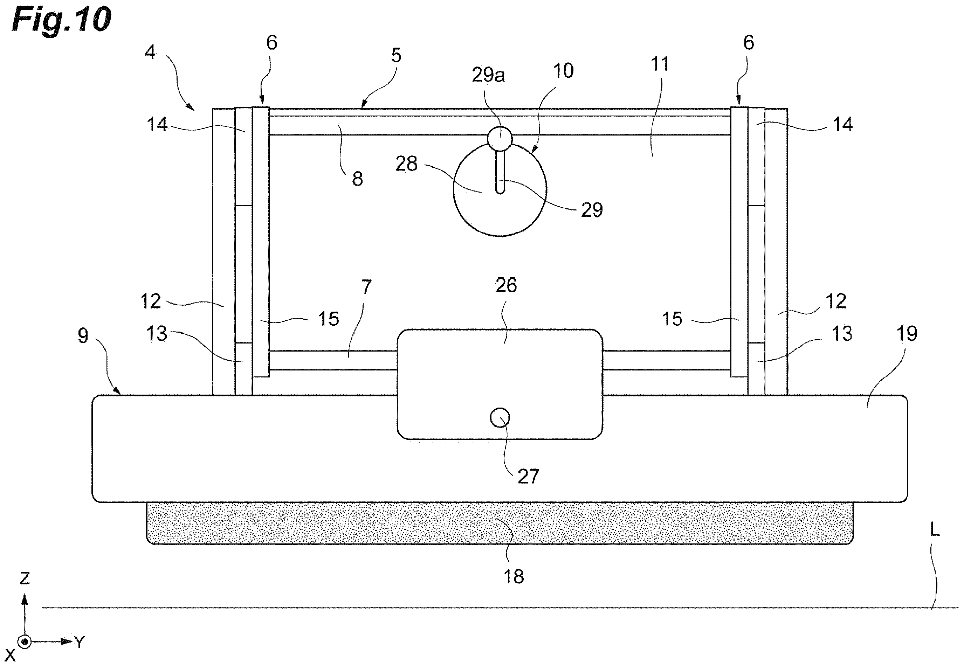

When the mode is switched from the cleaning mode to the movement mode by the mode switch 30, the controller 31 controls the brush motor 23 such that the rotating brush 18 stops rotating and controls the lifting and lowering motor 28 such that the cam 29 fixed to the output shaft 28a of the lifting and lowering motor 28 pushes up the upper connecting pin 8. At this time, the controller 31 half-rotates the lifting and lowering motor 28 from the state where the rotating brush 18 is grounded to the floor surface L. Then, the upper connecting pin 8 rises by the cam 29 pushing up the upper connecting pin 8 as illustrated in FIGS. 9 and 10, and thus the parallel link mechanism 6 rises. Accordingly, the brush unit 9 attached to the lower connecting pin 7 rises, and thus the rotating brush 18 is separated upward from the floor surface L.

Incidentally, feedback control may be performed on the lifting and lowering motor 28 by, for example, a cam being provided in the pivoting portion of the lower link 13 of the parallel link mechanism 6 with respect to the support member 5 and a limit switch that detects rotation of the cam being provided.

In the cleaning robot 1 described above, the floor surface L is cleaned by the cleaner 4 while the cleaning robot 1 travels when the cleaning mode is set by the mode switch 30. At this time, the trash on the floor surface L swept up by the rotating brush 18 is suctioned by a hose (not illustrated).

Here, the rotating brush 18 freely moves up and down by means of the parallel link mechanism 6 and freely swings in the forward-rearward direction and the rightward-leftward direction. Accordingly, the rotating brush 18 is reliably grounded to the floor surface L even in a case where the floor surface L has a step or an undulation.

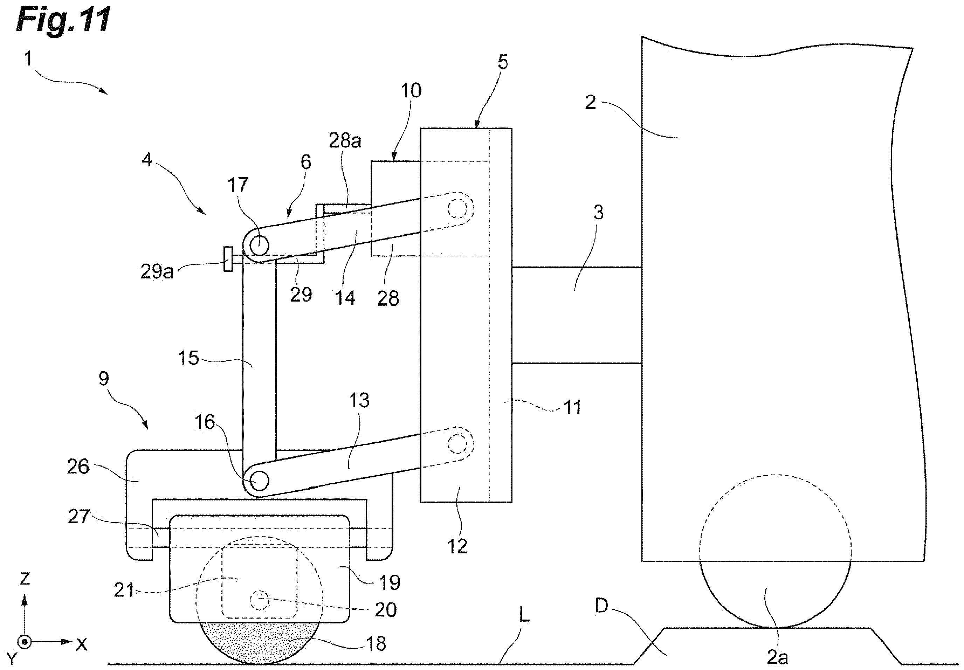

For example, in a case where the wheels 2a on both of the right and left sides of the traveling carriage 2 are on a step portion D of the floor surface L as illustrated in FIG. 11, the parallel link mechanism 6 is lowered by following the step portion D, and thus the rotating brush 18 is lowered and grounded to the floor surface L. In addition, in a case where the wheel 2a on one of the right and left sides of the traveling carriage 2 is on the step portion D of the floor surface L, the rotating brush 18 is lowered by the parallel link mechanism 6 being lowered by following the step portion D and the rotating brush 18 swings in the rightward-leftward direction by following the step portion D, and thus the rotating brush 18 as a whole is grounded to the floor surface L.

On the other hand, when the movement mode is set by the mode switch 30, the cleaning robot 1 travels with the rotating brush 18 not grounded to the floor surface L as illustrated in FIGS. 9 and 10. Accordingly, the floor surface L is not cleaned by the cleaner 4 while the cleaning robot 1 travels.

As described above, in the present embodiment, the two parallel link mechanisms 6 are fixed to both of the right and left sides of the support member 5 so as to be swingable in the upward-downward direction and the brush unit 9 having the rotating brush 18 grounded to the floor surface L is attached to the lower connecting pin 7 interconnecting the lower joint portions 16 of the two parallel link mechanisms 6. Accordingly, even when the floor surface L is stepped or undulates during the traveling of the cleaning robot 1, the rotating brush 18 moves in the upward-downward direction by following the step or the undulation of the floor surface L. As a result, the rotating brush 18 can be grounded even to the stepped or undulating floor surface L. As a result, the stepped or undulating floor surface L can be stably cleaned.

In addition, when the cleaning robot 1 moves without performing cleaning, the parallel link mechanism 6 is raised by the lifting and lowering unit 10 and the brush unit 9 is kept raised from the floor surface L, and thus the cleaning robot 1 is capable of traveling without dragging the rotating brush 18. As a result, the cleaning robot 1 is capable of traveling without slowing down more than necessary and the wear of the rotating brush 18 can be suppressed.

In addition, in the present embodiment, the rotating brush 18 is swingable in the forward-rearward direction about the lower connecting pin 7 and the rotating brush 18 is swingable in the rightward-leftward direction about the support pin 27. Accordingly, even when the floor surface L is stepped or undulates, the rotating brush 18 swings in the forward-rearward direction and the rightward-leftward direction by following the step or the undulation of the floor surface L. As a result, the rotating brush 18 can be reliably and smoothly grounded to the stepped or undulating floor surface L.

In addition, in the present embodiment, the lifting and lowering unit 10 swings the parallel link mechanism 6 in the upward-downward direction by lifting and lowering the upper connecting pin 8. Accordingly, it is possible to swing the parallel link mechanism 6 in the upward-downward direction in a space-efficient manner.

In addition, in the present embodiment, the lifting and lowering unit 10 has the lifting and lowering motor 28 and the cam 29 fixed to the output shaft 28a of the lifting and lowering motor 28 and pushing up the upper connecting pin 8. Accordingly, it is possible to lift and lower the upper connecting pin 8 with a simple structure. In addition, in a state where the rotating brush 18 is grounded to the floor surface L, the cam 29 is spaced downward from the upper connecting pin 8, and thus the rotating brush 18 is lowered by the upper connecting pin 8 being lowered when the wheel 2a of the traveling carriage 2 of the cleaning robot 1 is on the step or the undulation. As a result, the rotating brush 18 can be grounded to the floor surface L even when the wheel 2a of the traveling carriage 2 is on the step or the undulation.

Incidentally, the present disclosure is not limited to the above embodiment. For example, although the upper connecting pin 8 is pushed up by the L-shaped cam 29 in the above embodiment, the shape of the cam 29 is not particularly limited to the L-shape insofar as the upper connecting pin 8 can be pushed up. In addition, the mechanism lifting and lowering the brush unit 9 is not particularly limited to the combination of the lifting and lowering motor 28 and the cam 29 insofar as the parallel link mechanism 6 is used.

Although the lifting and lowering unit 10 swings the parallel link mechanism 6 in the upward-downward direction by lifting and lowering the upper connecting pin 8 in the above embodiment, the present disclosure is not particularly limited to that form. If spatially possible, the parallel link mechanism 6 may be swung in the upward-downward direction by the lower connecting pin 7 being lifted and lowered or by the lower link 13 or the upper link 14 being lifted and lowered.

Although the brush unit 9 has the cylindrical rotating brush 18 in the above embodiment, the brush sweeping up trash on the floor surface L is not particularly limited to the rotating brush 18 and may be a vibrating brush, a swinging brush, or the like.

Although the cleaner 4 is attached to the traveling carriage 2 having the four omnidirectional wheels 2a in the above embodiment, the present disclosure is also applicable to, for example, cleaners attached to vehicles having general wheels.

Although the cleaner 4 is mounted in the front portion of the cleaning robot 1 in the above embodiment, the present disclosure is also applicable to a cleaner mounted in, for example, the rear portion of the cleaning robot 1.

A cleaner for a cleaning robot cleaning a floor surface while traveling includes a support member, two parallel link mechanisms fixed to both right and left sides of the support member so as to be swingable in an upward-downward direction of the cleaning robot, a first connecting pin interconnecting joint portions of the two parallel link mechanisms, a second connecting pin disposed above the first connecting pin and interconnecting other joint portions of the two parallel link mechanisms, a brush unit attached to the first connecting pin and having a brush grounded to the floor surface, and a lifting and lowering unit lifting and lowering the brush unit by swinging the parallel link mechanism in the upward-downward direction.

## Claims

1. A cleaner for a cleaning robot cleaning a floor surface while traveling, the cleaner comprising:
a support member;
two parallel link mechanisms fixed to both right and left sides of the support member so as to be swingable in an upward-downward direction of the cleaning robot;
a first connecting pin interconnecting joint portions of the two parallel link mechanisms;
a second connecting pin disposed above the first connecting pin and interconnecting other joint portions of the two parallel link mechanisms;
a brush unit attached to the first connecting pin and having a brush grounded to the floor surface; and
a lifting and lowering unit lifting and lowering the brush unit by swinging the parallel link mechanism in the upward-downward direction.

2. The cleaner for a cleaning robot according to claim 1, wherein the brush unit has a block pivotably supported by the first connecting pin and a brush holder pivotably supported by the block via a support pin extending in a forward-rearward direction of the cleaning robot and holding the brush.

3. The cleaner for a cleaning robot according to claim 1 or 2, wherein the lifting and lowering unit swings the parallel link mechanism in the upward-downward direction by lifting and lowering the second connecting pin.

4. The cleaner for a cleaning robot according to claim 3, wherein
the lifting and lowering unit has a motor and a cam fixed to an output shaft of the motor and pushing up the second connecting pin, and
the cam is spaced downward from the second connecting pin in a state where the brush is grounded to the floor surface.
